# EUROPEAN PATENT APPLICATION

(11) **EP 4 665 087 A1**
(43) Date of publication of application: **17.12.2025**
(21) Application number: 24753610.5
(22) Date of filing: 06.02.2024
(51) Int. Cl.: H05B 45/37, H05B 47/155, H05B 45/325, H05B 45/54, F21V 23/00, F21S 41/141, F21S 43/14

(54) **LIGHT SOURCE DRIVING CONTROL DEVICE**

(30) Priority: 09.02.2023 KR 20230017635
(71) Applicant: LG INNOTEK CO. LTD, Gangseo-gu Seoul 07796 (KR)
(72) Inventor: JUNG, Seung Tae, Seoul 07796 (KR); HAN, Jae Hyun, Seoul 07796 (KR)
(74) Representative: M. Zardi & Co S.A.
(86) International application number: PCT/KR2024/001751
(87) International publication number: WO 2024/167285

(57) **Abstract**

A light source driving control device disclosed in an embodiment may include a microcomputer supplying a constant current through a single power channel terminal; a light source unit having an input terminal connected to a single power channel terminal of the microcomputer and having a plurality of light emitting units in which a plurality of light emitting diodes are each connected in series; a switching unit having a plurality of switching devices connected to the single power channel terminal of the microcomputer and output terminals of each of the plurality of light emitting units; and a plurality of drivers which receive a control signal from the microcomputer, are connected to an output terminal of at least one light emitting diode of at least one light emitting unit, and control the operation of the at least one connected thereto.

## Description

### [Technical Field]

An embodiment relates to a light source driving control device, and more particularly, to a light source driving control device capable of driving a multi-channel light emitting array using a single constant current channel for individual control (animation) of a light source unit.

### [Background Art]

Lighting is a device that can supply light or control the amount of light and is used in various fields. For example, lighting devices can be applied to various fields such as vehicles and buildings to illuminate the interior or exterior.

In particular, recently, light emitting devices have been used as light sources for lighting. These light emitting devices, such as light emitting diodes (LEDs), have advantages such as low power consumption, semi-permanent lifespan, fast response speed, safety, and environmental friendliness compared to existing light sources such as fluorescent lamps and incandescent lamps. These light emitting diodes are applied to various optical assemblies such as various display devices, indoor lights, or outdoor lights.

In general, lamps of various colors and shapes are applied to vehicles, and recently, lamps that use light emitting diodes as light sources for vehicles have been proposed. For example, light emitting diodes are applied to headlights, taillights, turn signals, daytime running lights, and side lights of vehicles.

At this time, the driving device that controls the operation of the lamp as described above receives a constant current of the PWM (Pulse Width Modulation) type from a power supply unit (not shown) and drives the light emitting diode using the constant current. At this time, the brightness of the light emitting diode can be controlled by adjusting the intensity of the current applied.

If a constant voltage method is used for individual control of the LED, a heat generation problem may occur in the LED and the input current may increase. In addition, if a multi-channel constant current method is used, there is a problem of applying a DC/DC converter to each power channel.

### [Disclosure]

### [Technical Problem]

An embodiment of the invention may provide a light source driving control device capable of driving multiple channel LED segments through a single channel of constant current for individual control of LEDs, i.e., animation control.

An embodiment of the invention can provide a vehicle lamp having a light source driving control device.

### [Technical Solution]

A light source driving control device according to an embodiment may include a microcomputer supplying a constant current through a single power channel terminal; a light source unit having an input terminal connected to a single power channel terminal of the microcomputer and having a plurality of light emitting units in which a plurality of light emitting diodes are each connected in series; a switching unit having a plurality of switching devices connected to the single power channel terminal of the microcomputer and output terminals of each of the plurality of light emitting units; and a plurality of drivers which receive a control signal from the microcomputer, are connected to an output terminal of at least one light emitting diode of at least one light emitting unit, and control the driving of the at least one connected light emitting diode thereto.

According to an embodiment of the invention, an input terminal of each of the plurality of light emitting units is connected to the single power channel terminal of the microcomputer, and each of the plurality of switching devices may control the same current to flow to the output terminal of each of the plurality of light emitting units.

According to an embodiment of the invention, at least one of the plurality of drivers controls the driving of at least two or more of the unit LED groups arranged in each of at least two light emitting units, and the unit LED groups may include one or more light emitting diodes connected in series.

According to an embodiment of the invention, each of the plurality of drivers may be connected to the output terminals of two or more-unit LED groups disposed in each of two to four light emitting units, respectively.

According to an embodiment of the invention, a base terminal of each of the plurality of switching devices may be connected to the single power channel terminal, a collector terminal may be connected to the output terminal of each light emitting unit, and an emitter terminal may be connected to the ground terminal via a resistor.

According to an embodiment of the invention, the emitter terminal of each of the switching devices may be connected to the ground terminal of a microcomputer and the ground terminal of the driver via a sensing resistor.

According to an embodiment of the invention, a control unit may be connected between the plurality of drivers and the microcomputer and transmit a control signal.

According to an embodiment of the invention, a LED array of each of the plurality of light emitting units may be disposed in a different lamp, and the unit LED groups may be sequentially driven.

### [Advantageous Effects]

In an embodiment, an operational reliability of a light source unit can be improved. For example, in an embodiment, a first protection circuit unit may be provided at an input terminal of the light source unit. The first protection circuit unit operates when an abnormal state of the light source unit, an abnormal state of power supplied to a driving control unit, and an abnormal state of a clock signal provided from the driving control unit are detected, thereby stopping the light emitting operation of the light source unit. Accordingly, in an embodiment, a reliability problem that may occur when the light source unit continues to operate under various abnormal states as described above can be solved, and each component circuit constituting a light source driving control device can be protected accordingly.

### [Description of Drawings]

FIG. 1 is a block diagram illustrating the configuration of a light source driving control device according to an embodiment.
FIG. 2 is a detailed circuit diagram of the light source driving control device of FIG. 1.
FIG. 3 is a circuit diagram illustrating the internal configuration of the driver of FIG. 2 and the circuit configuration for driving and controlling the LED array of the light source unit.
FIG. 4 is a top view of a vehicle to which a lamp having a light source driving control device according to an embodiment is applied.
FIG. 5 illustrates an example of a light source driving control device according to an embodiment being placed in a front lamp of a vehicle.
FIG. 6 illustrates an example of a drive device according to an embodiment being disposed at the rear of a vehicle.

### [Best Mode]

Hereinafter, preferred embodiments of the present invention will be described in detail with reference to the attached drawings. The technical idea of the present invention is not limited to some of the embodiments described, but can be implemented in various different forms, and within the scope of the technical idea of the present invention, one or more of the components between the embodiments can be selectively combined or substituted for use.

In addition, terms (including technical and scientific terms) used in the embodiments of the present invention may be interpreted as having a meaning that can be generally understood by a person of ordinary skill in the technical field to which the present invention belongs, unless explicitly and specifically defined and described, and terms that are commonly used, such as terms defined in a dictionary, may be interpreted in consideration of the contextual meaning of the relevant technology. Further, the terms used in the embodiments of the invention are for explaining the embodiments and are not intended to limit the invention. In this specification, the singular forms also may include plural forms unless otherwise specifically stated in a phrase, and in the case in which at least one (or one or more) of A and (and) B, C is stated, it may include one or more of all combinations that may be combined with A, B, and C. In describing the components of the embodiments of the invention, terms such as first, second, A, B, (a), and (b) may be used. Such terms are only for distinguishing the component from other component, and may not be determined by the term by the nature, sequence or procedure etc. of the corresponding constituent element. And when it is described that a component is "connected ", "coupled" or "joined" to another component, the description may include not only being directly connected, coupled or joined to the other component but also being "connected ", "coupled" or "joined" by another component between the component and the other component. In addition, in the case of being described as being formed or disposed "above (on)" or "below (under)" of each component, the description includes not only when two components are in direct contact with each other, but also when one or more other components are formed or disposed between the two components. In addition, when expressed as "above (on)" or "below (under)", it may refer to a downward direction as well as an upward direction with respect to one element.

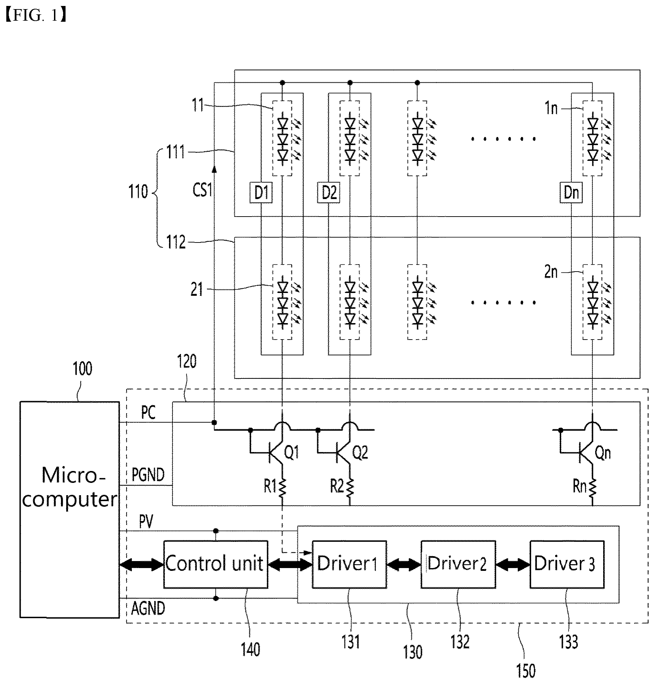

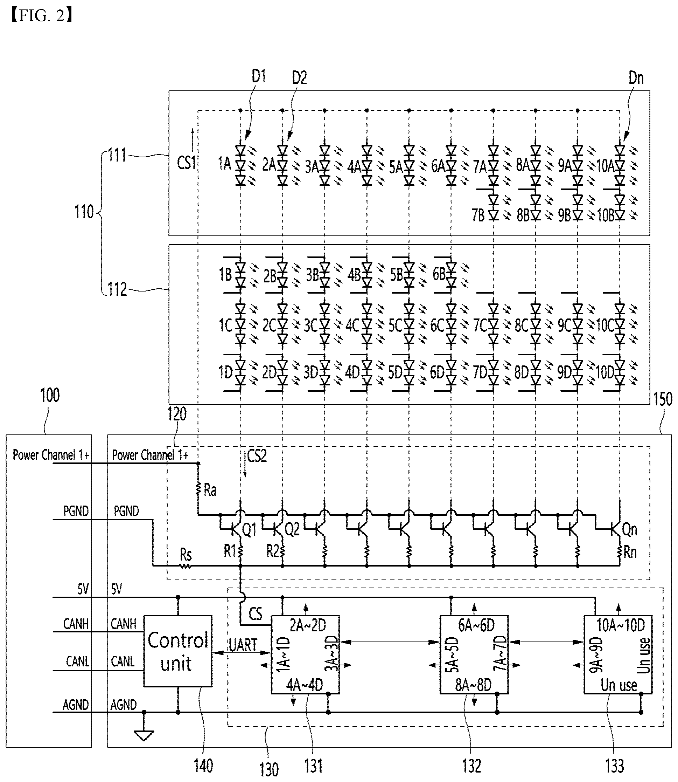

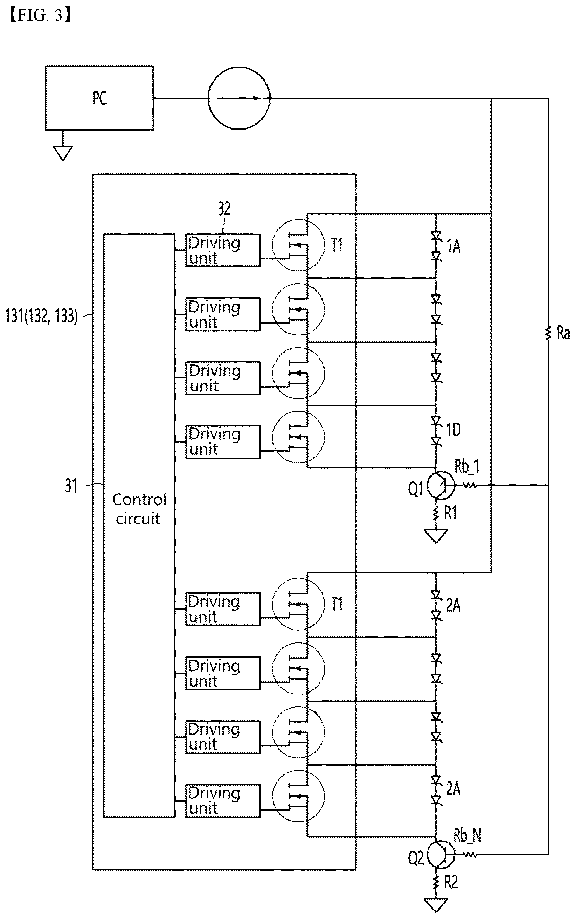

FIG. 1 is a block diagram illustrating the configuration of a light source driving control device according to an embodiment. FIG. 2 is a circuit diagram specifically illustrating the light source driving control device of FIG. 1. FIG. 3 is a circuit diagram for driving control of the driver and light source array of the light source unit of FIG. 2.

Referring to FIG. 1, the light source driving control device includes a microcomputer 100, a light source unit 110, and a drive control unit 150. The drive control unit 150 may include a switching unit 120, a control unit 140, and a driver unit 130. The microcomputer 100 may be a vehicle control unit (VCU) or a main control unit installed in a vehicle. The microcomputer 100 may supply various signals for controlling the above components and various power sources for driving them.

The light source unit 110 may be installed in a vehicle to form a lamp. For example, the light source unit 110 may be positioned at least once in at least one of the front, rear, and side of the vehicle. For example, the light source unit 110 may be applied to the front lamp of the vehicle. For example, the light source unit 110 may perform at least one function among a headlight, a turn signal, a daytime running light, a high beam, a low beam, and a fog lamp by emitting light. For example, the light source unit 110 may provide additional functions such as a welcome light or a celebration effect by emitting light in conjunction with the opening of a vehicle door. For example, the light source unit 110 may be applied to a rear lamp that performs at least one function among a side lamp, a brake light, and a turn signal by emitting light.

The light source unit 110 may include a plurality of light emitting diodes. The light source unit 110 may include a light-emitting package in which a light emitting diode chip is packaged. The light emitting diode chip may emit at least one of blue, green, red, ultraviolet (UV), and infrared light. If the light source unit 110 includes plurality of light emitting diodes, at least two of the plurality of light emitting diodes may be arrayed in series, and at least two arrays connected in series may be connected in parallel.

The light source unit 110 may be driven by an applied current. For example, a pulse-type current CS1 may be supplied to the light source unit 110 of the embodiment from a single power channel PC of the microcomputer 100. For example, the current may be a constant current. To this end, the input terminal of the light source unit 110 and the power channel PC terminal of the microcomputer 100 may be connected to each other.

The constant current may be a Pulse width modulation (PWM) type current. The microcomputer 100 may be a module that controls at least one lamp among multiple lamps installed in a vehicle. While the above description describes current output from a separate module as being applied to the light source unit 110 of the light source driving control device, the present invention is not limited thereto. For example, the light source driving control device may additionally include a converter (not shown) connected to a vehicle battery (not shown) and configured to drive the light source unit 110 based on power supplied by the discharge of the battery.

The light source unit 110 may be driven by a constant current from a single power channel PC to output light of a specific color and brightness. The light emitting diodes of the light source unit 110 may be simultaneously turned on or off according to a control signal. Furthermore, the light emitting diodes of the light source unit 110 may be sequentially turned on or off in one or more groups according to a control signal.

The light source unit 110 includes one or more light source modules 111 and 112. In the case of plurality of light source modules 111 and 112, they may be spaced apart so as to be positioned in different areas or on different lamps. Specifically, the light source unit 110 may be divided into two or more light source modules, for example, a first light source module and a second light source module, depending on the lighting pattern or area of each light emitting unit D1-Dn. The LED arrays within the plurality of light source modules 111 and 112 may be interconnected. Each LED array may be a light emitting unit or an LED string.

The light source unit 110 includes a plurality of light emitting units D1-Dn, and each of light emitting units which is an LED array, comprises a plurality of light emitting diodes connected in series. Furthermore, the input terminals of the plurality of light emitting units D1-Dn may be connected in parallel to a single power channel PC. Accordingly, the light emitting diodes in the plurality of light emitting units D1-Dn may be turned on or off by the constant current of the single power channel PC. The number of the plurality of light emitting units D1-Dn may be n, and n may be in the range of 8 to 12. The number of light emitting diodes connected to each light emitting unit D1-Dn may be in the range of 12 to 16. Here, the input terminals (anode terminals) of the n LED arrays 11-1n of the first light source module 111 are each connected to the single power channel PC, and the input terminals of the n LED arrays 21-2n of the second light source module 112 may be connected to the output terminals (cathode terminals) of the n LED arrays of the first light source module 111.

The output terminals of the n LED arrays 21-2n of the second light source module 112 may be connected to the switching unit 120 of the constant current driving unit 150. The switching unit 120 may include a plurality of switching devices Q1-Qn. The plurality of switching devices Q1-Qn may be respectively connected to the output terminals (cathode terminals) of the n light emitting units D1-Dn.

The switching unit 120 includes a plurality of switching devices Q1-Qn connected to the output terminals of each light emitting unit D1-Dn and the power channel PC terminal. Each of the plurality of switching devices Q1-Qn may be connected to the output terminals of each light emitting unit D1-Dn, i.e., each LED array. The base terminal of each switching device Q1-Qn may be connected to the power channel PC terminal, and the collector terminal may be connected to the output terminal of each light emitting unit D1-Dn.

Each of the switching devices Q1-Qn may be an NPN type transistor. As another example, each of the switching devices may be a PNP type transistor. In addition, each of the switching devices may include at least one of a matched transistor (BJT), a matched field-effect transistor (JFET), and a metal oxide semiconductor field-effect transistor (MOSFET).

Each switching device Q1-Qn may selectively perform a switching operation so as to supply a constant current to each light emitting unit D1-Dn. A collector terminal of each switching device Q1-Qn may be connected to an output terminal of the first light source unit 111. An emitter terminal of each switching device Q1-Qn may be connected to a ground terminal (PGND) through resistors R1 to Rn and a sensing resistor Rs. An emitter terminal of each switching device Q1-Qn is connected to a current sensing terminal (CS: current sensing) of a driver through a node to which the resistors R1 to Rn and the sensing resistor Rs are connected. The driver unit 130 is connected to the microcomputer 100 through a serial communication channel via the control unit 140, and the driver unit 130 is connected to a plurality of drivers 131, 132, and 133, and each driver 131, 132, and 133 may control two or more light emitting units D1-Dn. The serial communication channel may include a UART (Universal asynchronous receiver transmitter) channel.

In addition, the control unit 140 may be implemented as a communication control unit and a CAN (Controller area network), which is a serial bus system. The control unit 140 is connected to a high or low signal (CANH, CANL) terminal of the microcomputer 100, and may control the operation of the drivers 131, 132, and 133. The control unit 140 and driver 131, 132, and 133 may receive the voltage of the power supply (5V) from the microcomputer 100 and be connected to the ground terminal (AGND).

As shown in FIG. 2, the switching unit 120 is a current balance circuit that can receive the constant current of a single power channel PC and supply the same current to each light emitting unit D1-Dn, i.e., each LED array.

Each driver 131, 132, and 133 of the driver unit 130 is an LED matrix IC that may individually control the driving of the unit driving group 1A to 10D and open or short each driving group.

The first driver 131 of the driver unit 130 has control terminals 1A-4D, and the 1A-1D terminals are connected to the output terminals of the 1A to 1D LED groups of the first light emitting unit D1 and control on and off, respectively, the 2A-2D terminals are connected to the output terminals of the 2A to 2D LED groups of the second light emitting unit D2 and control on and off, respectively, the 3A-3D terminals are connected to the output terminals of the 3A to 3D LED groups of the third light emitting unit D3 and control on and off, respectively, and the 4A-4D terminals are connected to the output terminals of the 4A to 4D LED groups of the fourth light emitting unit D4 and control on and off, respectively.

The second driver 132 of the driver unit 130 has control terminals 5A-8D, and the 5A-5D terminals are connected to the output terminals of the 5A to 5D LED groups of the fifth light emitting unit D5 and control on and off, respectively, the 6A-6D terminals are connected to the output terminals of the 6A to 6D LED groups of the sixth light emitting unit D6 and control on and off, respectively, the 7A-7D terminals are connected to the output terminals of the 7A to 7D LED groups of the seventh light emitting unit D7 and control on and off, respectively, and the 8A-8D terminals are connected to the output terminals of the 8A to 8D LED groups of the eighth light emitting unit D8 and control on and off, respectively.

The third driver 133 of the driver unit 130 has control terminals 9A-10D, and the 9A-9D terminals are connected to the output terminals of the 9A to 9D LED groups of the ninth light emitting unit D9 and control on and off, respectively, and the 10A-10D terminals are connected to the output terminals of the 10A to 10D LED groups of the last tenth light emitting unit Dn and control on and off, respectively. In addition, the unused terminal (Un Use) of the third driver 133 may be used when the number of the light emitting units further increases. Here, the 1A to 10D LED groups are one or two or more LEDs connected in series, and may be the same or different from each other. The 1A to 10D LED groups, which are unit driving groups, can be sequentially turned on and off within one lamp or in different lamps. The unit driving group 1A to 10D LED groups can be connected by dividing the number of LEDs into LSD1 and LSD2 within each light emitting unit D1-Dn, and the number of LEDs may satisfy: LSD1 > LSD2, and LSD1 may be, for example, 3 or more.

FIG. 3 is a diagram showing a connection circuit between the driver 131, 132, and 133 and two light emitting units. As shown in FIG. 3, each LED of the two light emitting units is connected to the control terminal of the driver 131, 132, and 133 as a unit group 1A-1D and 2A-2D, and each unit group is connected to a switching transistor T1 and a driving unit 32 within each driver, and the operation of each driving unit 32 can be controlled by a control circuit 31. Each switching transistor T1 and driving unit 32 is connected to the output terminal and input terminal of each unit LED group, and may control their on/off.

The emitter voltages of the above switching devices Q1-Qn may be the same with the same node voltage. Each switching device Q1-Qn may control the output current CS2 of each light emitting unit D1-Dn. Since it is a constant current control, the highest voltage in each light emitting unit D1-Dn may be the voltage at both ends of the first light emitting unit D1 based on the voltage at both ends of each light emitting unit D1-Dn, and the voltage at both ends of other light emitting units may be low. In this case, the input voltage may be determined as the sum of the voltage at both ends of the first light emitting unit D1, the voltage (Vce) between the collector and the emitter of the first switching device Q1, and the voltage across the sensing resistor Rs.

The current flowing in each light emitting unit D1 may be calculated as follows. For example, the current flowing in the first light emitting unit is taken as an example.

IRe1 = (Vb-VRb1-Vbe1)/Re1 (Rb1 is very low and may be ignored)

Here, IRe1 is the current of the resistor connected to the emitter of the first switching device Q1, and may be the current of the first light emitting unit, Vb is the voltage at the base terminal of the first switching device Q1, VRb1 is the voltage across the resistor of the base terminal, Vbe1 is the voltage across the base terminal and the emitter terminal, and Re1 is the resistance value of the emitter terminal.

The embodiment of the invention can perform animation control for the LED unit driving group by using a single power channel PC that supplies constant current and a plurality of switching devices Q1-Qn and drivers 131, 132, and 133 connected to each light emitting unit D1-Dn, and for example, may control the driving of 40 unit LED groups by using 10 control terminals. Therefore, by using a switching unit 120 having a plurality of switching devices Q1-Qn connected to each LED array and receiving a constant current of one channel, the same current can be flowed for each unit group of each light emitting unit D1-Dn, thereby controlling the driving, thereby performing the same control as the multi-channel constant current method.

Since the invention uses a constant current channel of one channel, it can be simpler and cheaper in terms of circuitry than the constant current supply method of one channel. In addition, since the constant current method is used, it may be improved in terms of heat dissipation compared to the constant voltage supply method, and for example, the size of the circuit board can be reduced and a heat sink can be eliminated. In addition, since a constant current channel of one channel is used compared to the multi-channel constant current method, the electromagnetic shielding effect may be improved and high power efficiency can be provided.

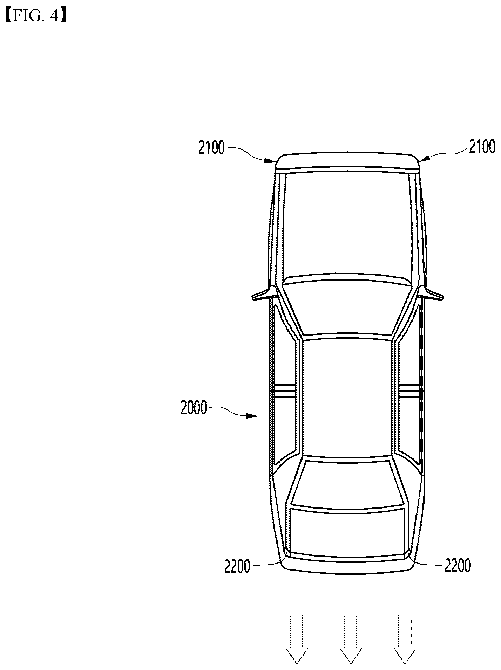

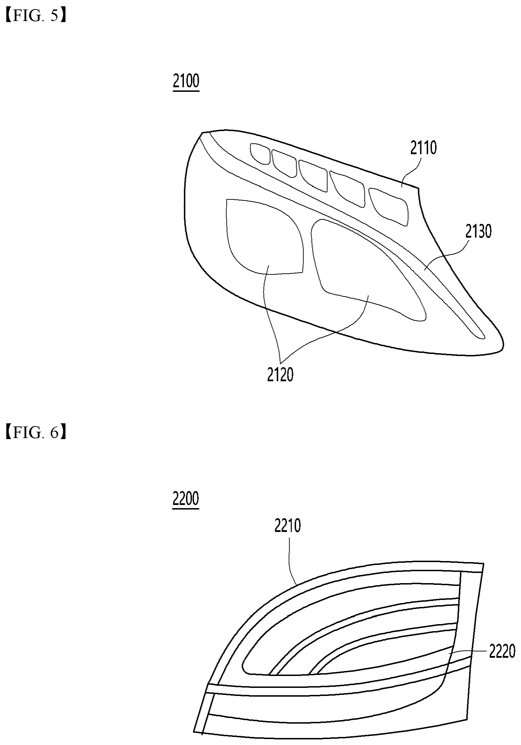

FIG. 4 is a top view of a vehicle to which a lamp having a light source driving control device according to an embodiment is applied, FIG. 5 is an example of a lamp having a light source driving control device according to an embodiment being arranged at the front of a vehicle, and FIG. 6 is an example of a lamp having a lighting driving control device according to an embodiment being arranged at the rear of a vehicle.

Referring to FIGS. 4 to 6, the lighting driving device according to the embodiment may be applied to a lamp of a vehicle 2000. The lamp may be arranged at least one at the front, rear, and side of the vehicle 2000. The lighting driving device is provided in various shapes such as curves and straight lines, and may be applied to lamps arranged in various areas of the vehicle 2000. For example, referring to FIG. 5, the lamp can be applied to a front lamp 2100 of the vehicle 2000. The front lamp 2100 may include at least one lamp module including a first cover member 2110 and the lighting device 1000.

The first cover member 2110 may accommodate the light driving device. The front lamp 2100 may control the driving timing of the light driving device included in at least one lamp module to provide multiple functions. For example, the front lamp 2100 may include a first lamp module 2120 and a third lamp module 2130 that provide at least one function among a headlight, a turn signal, a daytime running light, a high beam, a low beam, and a fog light by the light emission of the light source unit 110 of the light driving device. In addition, the front lamp 2100 may provide additional functions such as a welcome light or a celebration effect when a driver opens a vehicle door.

Referring to FIG. 6, the lamp can be applied to a rear lamp 2200 of a vehicle. The rear lamp 2200 may include a second cover member 2210 and at least one lamp module including the light driving device. The second cover member 2210 may accommodate the light driving device. The rear lamp 2200 may control the driving timing of the light source unit included in at least one lamp module to provide multiple functions. For example, the rear lamp 2200 may include a second lamp module 2220 that provides at least one function of a sidelight, a brake light, and a turn signal light by the light emission of the light source unit 110 of the light source driving control device.

In the embodiment, multi-channel individual LED groups can be driven using a single-channel constant current for individual control of the LED unit driving group of the light source control device, thereby improving the reliability of the lamp.

Features, structures, effects, etc. described in the embodiments above are included in at least one embodiment of the invention, and are not necessarily limited to only one embodiment. Furthermore, the features, structures, and effects illustrated in each embodiment may be combined or modified with respect to other embodiments by those skilled in the art in the field to which the embodiments belong. Therefore, contents related to these combinations and variations should be construed as being included in the scope of the invention. Although described based on the embodiments, this is only an example, this invention is not limited, and it will be apparent to those skilled in the art that various modifications and applications not illustrated above are possible without departing from the essential characteristics of this embodiment. For example, each component specifically shown in the embodiment may be modified and implemented. And the differences related to these modifications and applications should be construed as being included in the scope of the invention as defined in the appended claims.

## Claims

1. A light source driving control device comprising:
a microcomputer supplying a constant current through a single power channel;
a light source unit having an input terminal connected to a single power channel terminal of the microcomputer and having a plurality of light emitting units in which a plurality of light emitting diodes are each connected in series;
a switching unit having a plurality of switching devices connected to the single power channel terminal of the microcomputer and the output terminals of each of the plurality of light emitting units; and
a plurality of drivers which receive a control signal from the microcomputer, are connected to an output terminal of at least one light emitting diode of at least one light emitting unit, and control a driving of the at least one connected light emitting diode thereto.

2. The light source driving control device of claim 1, wherein an input terminal of each of the plurality of light emitting units are connected to the single power channel of the microcomputer, and
wherein each of the plurality of switching devices controls the same current to flow to the output terminal of each of the plurality of light emitting units.

3. The light source driving control device of claim 2,
wherein at least one of the plurality of drivers controls the driving of at least two or more-unit LED groups disposed in each of at least two light emitting units, and
wherein the unit LED group is connected in series with one or more light emitting diodes.

4. The light source driving control device of claim 3,
wherein each of the plurality of drivers is connected to the output terminals of two or more of the unit LED groups disposed in each of two to four light emitting units, respectively.

5. The light source driving control device of claim 1 or 2,
wherein a base terminal of each of the plurality of switching devices is connected to the single power channel terminal, a collector terminal is connected to the output terminal of each of the light emitting units, and an emitter terminal is connected to the ground terminal through a resistor.

6. The light source driving control device of claim 5,
wherein the emitter terminal of each of the switching devices is connected to a ground terminal of the microcomputer and a ground terminal of the driver through a sensing resistor.

7. The light source driving control device of claim 1 or 2, comprising:
a control unit that is connected between the plurality of drivers and the microcomputer and transmits a control signal.

8. The light source driving control device of claim 1 or 2,
wherein a LED array of each of the plurality of light emitting units is disposed in different lamps and the unit LED groups are sequentially driven.
